# EUROPÄISCHE PATENTSCHRIFT

(11) **EP 2 765 045 B1**
(45) Veröffentlichungstag und Bekanntmachung des Hinweises auf die Patenterteilung: **01.01.2020**
(21) Anmeldenummer: 14151274.9
(22) Anmeldetag: 15.01.2014
(51) Int. Cl.: G06F 11/16

(54) **Schaltung zur Steuerung eines Beschleunigungs-, Brems- und Lenksystems eines Fahrzeugs**
Circuit for controlling an acceleration, braking and steering system of a vehicle
Circuit de commande d'un système d'accélération, de freinage et de direction d'un véhicule

(30) Priorität: 12.02.2013 DE 102013202253
(43) Veröffentlichungstag der Anmeldung: 13.08.2014
(73) Patentinhaber: Schaeffler Paravan GmbH & Co. KG, 91074 Herzogenaurach (DE)
(72) Erfinder: Arnold, Roland, 72539 Pfronstetten-Aichelau (DE); Kotrotsios, Georg, 55122 Mainz (DE)
(74) Vertreter: Kohler Schmid Möbus Patentanwälte

(56) Entgegenhaltungen:
- EP-A1- 0 754 611
- DE-A1- 19 829 126
- DE-A1-102010 013 349
- DE-B4-102006 062 300
- US-A1- 2007 250 183

## Beschreibung

Die Erfindung betrifft eine Schaltungseinrichtung zur Steuerung eines Beschleunigungs-, Brems- und Lenksystems eines Fahrzeugs mit mindestens zwei separaten Motoren zur Betätigung des Beschleunigungs- und Bremssystems und mindestens zwei separaten Motoren zur Betätigung des Lenksystems und mit mindestens einer elektronischen Kontrolleinheit zur Ansteuerung der mindestens zwei separaten Motoren zur Betätigung des Beschleunigungs- und Bremssystems sowie der mindestens zwei separaten Motoren zur Betätigung des Lenksystems.

Eine solche Schaltungseinrichtung ist aus der DE 10 2006 062 300 B4 bereits bekannt. Diese bekannte Schaltungseinrichtung weist zwei Kontrolleinheiten, eine für das Brems- und Beschleunigungssystem und eine für das Lenksystem, auf, wobei jede der Kontrolleinheiten zwei identische, redundante CPUs aufweist. Im Betrieb ist jeweils nur eine der CPUs aktiv. Wird durch einen Sicherheitsprozessor eine Störung der gerade aktiven CPU festgestellt, so wird auf die andere CPU umgeschaltet, die die weitere Steuerung übernimmt.

Die bekannte Steuerung weist durch das Vorhandensein redundanter CPUs sowie redundanter Sicherheitsprozessoren in den Kontrolleinheiten einen hohen Sicherheitsgrad auf. Es ist nicht nur eine Redundanz in den Motoren, sondern auch in der Steuerung des Brems- und Beschleunigungssystems sowie des Lenksystems des Fahrzeugs gegeben.

Aus der DE 198 29 126 A1 ist ein elektromechanisches Bremssystem für Kraftfahrzeuge bekannt, das drei Rechner zur redundanten Auswertung von Messsignalen und Ansteuerung des Bremspedals aufweisen. Eine Monitorschaltung entscheidet, welcher Rechner zur Ansteuerung des Bremspedals ausgewählt wird.

Die EP 0 754 611 A1 beschreibt ein Brems- und Lenksystem für Kraftfahrzeuge mit einer Recheneinheit, die ebenfalls drei redundante CPUs aufweist. Das Ansteuersignal einer der CPUs wird verwertet.

Die US 2007/250 183 A1 beschreibt ein Fahrzeugkontrollsystem mit drei redundanten Controllern. Jeder Controller erzeugt Ansteuersignale für das Fahrzeugsystem. Falls einer der Controller andere Ansteuersignale als die beiden anderen Controller erzeugt, wird versucht, diesen Controller durch Synchronisation wieder zu integrieren. Jeder Controller weist dazu einen Meta-Controller auf.

Aus der DE 10 2010 013 349 A1 ist ein Computersystem mit drei Prozessoren bekannt, bei dem Vergleichseinrichtungen jeweils einen paarweisen Vergleich der Ausgangssignale zweier Prozessoren vornehmen und an eine Logikschaltungseinrichtung weiterleiten.

Der vorliegenden Erfindung liegt die Aufgabe zugrunde, eine Schaltungseinrichtung vorzuschlagen, die mit wenigen Bauteilen auskommt und dennoch ein hohes Sicherheitsniveau aufweist.

Die Aufgabe wird gelöst durch eine Schaltungseinrichtung zur Steuerung eines Beschleunigungs-, Brems- und Lenksystems eines Fahrzeugs mit den Merkmalen des Anspruchs 1.

Die erfindungsgemäße Schaltungseinrichtung kommt also mit nur drei CPUs und einem Logikbaustein aus. Hierdurch ist eine deutliche Einsparung an Bauteilen gegenüber der Schaltungseinrichtung mit vier CPUs möglich. Da stets alle drei CPUs arbeiten und ihre Ansteuerergebnisse miteinander vergleichen bzw. dieser Vergleich im Logikbaustein erfolgt, kann dennoch die erforderliche Sicherheit gewährleistet werden. Selbst bei Ausfall einer der CPUs stehen immer noch zwei redundante Systeme zur Steuerung des Brems- und Beschleunigungssystems sowie des Lenksystems zur Verfügung.

Der programmierbare Logikbaustein kann vorzugsweise ein CPLD (complex programmable logic device) sein. Diese Bausteine sind günstiger und wesentlich robuster als Sicherheitsprozessoren. Sie enthalten eine logische Matrix zur Verknüpfung von Eingangssignalen nach programmierbaren Regeln.

Die Eingangssteuersignale für die CPUs können von Bedienelementen des Brems- und Beschleunigungssystems sowie des Lenksystems, die vorzugsweise im Fahrzeug angeordnet sind, sowie von Positionssensoren der Motoren erzeugbar sein. Diese Bedienelemente können beispielsweise Joysticks, Lenkräder und/oder Pedale sein. Auch eine Fernsteuerung des Brems- und Beschleunigungssystems sowie des Lenksystems von außerhalb des Fahrzeugs ist denkbar.

Neben den von den Bedienelementen und den Motoren herrührenden Eingangssignalen verarbeiten die CPUs außerdem Sensorsignale von den Motoren, die deren Betriebszustand wiedergeben. Insbesondere können die Sensorsignale von Strommesseinrichtungen und/oder Temperaturfühlern an jedem der Motoren erzeugbar sein. Über die Messung des Stroms sowie der Temperatur lassen sich zuverlässig fehlerhafte Betriebszustände der Motoren und hier insbesondere Kurzschlüsse der Wicklungen feststellen.

Neben direkten Signalen von den CPUs empfängt der Logikbaustein über weitere Leitungen jeweils Vergleichsergebnisse der Signale der beiden benachbarten CPUs und zieht diese zusätzlich zu den direkt empfangenen Daten zur Überprüfung der korrekten Funktionsweise der CPUs heran. Weiter können auch die Ausgangssignale der CPUs auf deren Eingang rückgekoppelt werden.

Mit den vom Logikbaustein durchgeschalteten Ansteuersignalen einer der CPUs können vorzugsweise H-Brücken-Schaltungen der Motoren ansteuerbar sein. Mit diesen Schaltungen sind mit schaltungstechnisch geringem Aufwand die Drehrichtung sowie die Beschleunigung sowie das Abbremsen der Motoren steuerbar. Die Schalter in den H-Brücken werden in der Regel durch Transistoren realisiert. Es kann somit auf Relais verzichtet werden.

Wie bei dem bekannten System können die mindestens zwei separaten Motoren des Brems- und Beschleunigungssystems und die mindestens zwei separaten Motoren des Lenksystems jeweils eine gemeinsame Welle antreiben. Dadurch lässt sich die erfindungsgemäße Schaltungseinrichtung auch an bestehenden Fahrzeugen ohne Redundanz mit relativ geringem Aufwand nachrüsten.

Die Erfindung betrifft außerdem ein Verfahren zur Steuerung eines Beschleunigungs- und Bremssystems und eines Lenksystems eines Fahrzeugs mit den Merkmalen des Anspruchs 8.

Dabei kann die Programmierung des Logikbausteins vorzugsweise derart sein, dass er die Ansteuersignale derjenigen CPU durchschaltet, die beim Vergleich der Ansteuersignale dieser CPU mit den Ansteuersignalen, die von den beiden anderen CPUs erzeugt werden, am vertrauenswürdigsten erscheint. Erscheint eine CPU als defekt, kann diese CPU bei der weiteren Auswertung durch den Logikbaustein nicht mehr berücksichtigt werden. Die Ansteuerung erfolgt dann mit den beiden verbleibenden, fehlerfrei funktionierenden CPUs, die weiterhin redundant sind. Wird eine Fehlfunktion einer der CPUs vom Logikbaustein festgestellt, kann außerdem eine entsprechende Fehlermeldung beispielsweise an eine Anzeigeeinrichtung im Fahrzeug ausgegeben werden.

Im Folgenden wird eine bevorzugte Ausgestaltung einer erfindungsgemäßen Schaltungseinrichtung anhand eines Blockschaltbildes näher beschrieben, das eine Kontrolleinheit 10 sowie Motoren 12, 13 für das Brems- und Beschleunigungssystem und Motoren 14, 15 für die Lenkung eines nicht weiter dargestellten Fahrzeugs zeigt.

Die Kontrolleinheit 10 umfasst drei CPUs CPU1, CPU2, CPU3. Die drei CPUs CPU1 bis CPU3 sind identisch aufgebaut und führen identische Aufgaben durch. Sie erhalten über einen ersten Eingang 16 jeweils drei redundante Eingangssignale von nicht näher dargestellten Bedienelementen wie Joysticks, Lenkrädern oder Pedalen für die Lenkung und das Brems- und Beschleunigungssystem des Fahrzeugs und über einen zweiten Eingang 17 drei redundante Eingangssignale von Positionssensoren an den Motoren. Weiter erhalten die drei CPUs CPU1 bis CPU3 über Leitungen 18, 19, 20, 21 weitere Sensorsignale der Motoren 12 bis 15. Diese Sensorsignale enthalten Informationen über den Betriebszustand der Motoren 12 bis 15 und hier insbesondere auch über den Stromfluss durch die Motoren 12 bis 15 und deren Temperatur. Aus den Eingangssteuersignalen 16, 17 und den Sensorsignalen der Leitungen 18 bis 21 berechnen die drei CPUs CPU1 bis CPU 3 jeweils Ausgangssignale für die Motoren 12 bis 15 und übermitteln diese über Leitungen 22, 23, 24 an einen programmierbaren Logikbaustein 11. Der Logikbaustein 11 wählt in Abhängigkeit von seiner Programmierung und den Eingangssignalen, die er von den drei CPUs CPU1 bis CPU3 erhält, eine der drei CPUs aus und leitet deren Signale an die vier Motoren 12 bis 15 weiter. Dabei sind die drei CPUs CPU1 bis CPU3 über eine Leitung 25, die gestrichelt eingezeichnet ist, untereinander verbunden. Die von den benachbarten CPUs erhaltenen Signale werden mit den eigenen Signalen verglichen. Das Ergebnis des Vergleichs wird über die Leitungen 22 bis 24 an den Logikbaustein 11 übermittelt und bei der Auswahl der CPU, deren Signale an die Motoren 12 bis 15 weitergeleitet werden, berücksichtigt. Die Programmierung des Logikbausteins 11 kann dabei zweckmäßigerweise derart erfolgen, dass eine einmal ausgewählte CPU so lange die Motoren 12 bis 15 ansteuert, bis beide benachbarten CPUs andere Ausgangssignale liefern als die bisher ausgewählte CPU. Sollte dieser Fall eintreten, so kann davon ausgegangen werden, dass die zuvor ausgewählte CPU nicht mehr zuverlässig funktioniert, und es wird vom Logikbaustein 11 eine andere CPU für die weitere Ansteuerung der Motoren 12 bis 15 ausgewählt.

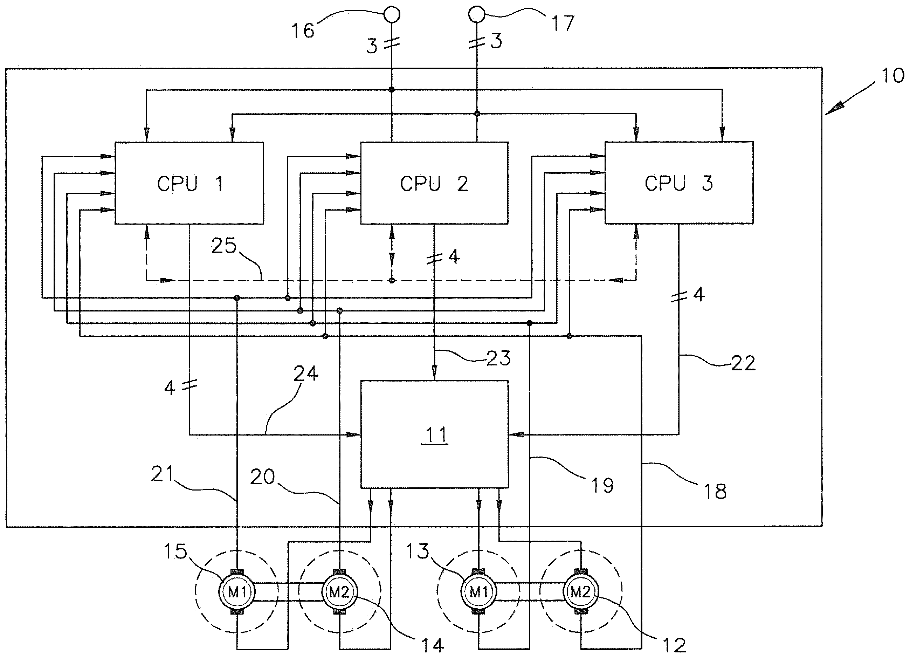

## Patentansprüche

1. Schaltungseinrichtung zur Steuerung eines Beschleunigungs-, Brems- und Lenksystems eines Fahrzeugs mit mindestens zwei separaten Motoren (12, 13) zur Betätigung des Beschleunigungs- und Bremssystems und mindestens zwei separaten Motoren (14, 15) zur Betätigung des Lenksystems, und mit mindestens einer elektronischen Kontrolleinheit (10) zur Ansteuerung der mindestens zwei separaten Motoren (12, 13) zur Betätigung des Beschleunigungs- und Bremssystems sowie der mindestens zwei separaten Motoren (14, 15) zur Betätigung des Lenksystems, **dadurch gekennzeichnet, dass** die mindestens eine Kontrolleinheit (10) drei identische CPUs (CPU1, CPU2, CPU3) und einen programmierbaren Logikbaustein (11) aufweist, wobei jede der CPUs (CPU1, CPU2, CPU3) in Abhängigkeit von Eingangssteuersignalen (16, 17) sowie von Sensorsignalen der Motoren (12, 13, 14, 15) Ansteuersignale für die Motoren (12, 13, 14, 15) erzeugt und an den programmierbaren Logikbaustein (11) weiterleitet, der abhängig von seiner Programmierung die Ansteuersignale einer der CPUs (CPU1, CPU2, CPU3) an die Motoren (12, 13, 14, 15) weiterleitet, und dass jede CPU (CPU1, CPU2, CPU3) die Ansteuersignale von den beiden anderen CPUs empfängt und mit den eigenen Ansteuersignalen vergleicht und das Vergleichsergebnis an den programmierbaren Logikbaustein (11) weiterleitet, sodass der Logikbaustein (11) neben direkten Signalen von den CPUs (CPU1, CPU2, CPU3) jeweils auch Vergleichsergebnisse der Signale der beiden benachbarten CPUS (CPU1, CPU2, CPU3) empfängt.

2. Schaltungseinrichtung nach Anspruch 1, **dadurch gekennzeichnet, dass** der programmierbare Logikbaustein (11) ein CPLD (complex programmable logic device) ist.

3. Schaltungseinrichtung nach Anspruch 1 oder 2, **dadurch gekennzeichnet, dass** die Eingangssteuersignale (16, 17) von Bedienelementen des Brems- und Beschleunigungssystems und des Lenksystems und von Positionssensoren der Motoren (12 - 15) erzeugbar sind.

4. Schaltungseinrichtung nach Anspruch 3, **dadurch gekennzeichnet, dass** die Bedienelemente Joysticks, Lenkräder und/oder Pedale sind.

5. Schaltungseinrichtung nach einem der vorhergehenden Ansprüche, **dadurch gekennzeichnet, dass** die Sensorsignale von Strommesseinrichtungen und/oder Temperaturfühlern an jedem der Motoren (12, 13, 14, 15) erzeugbar sind.

6. Schaltungseinrichtung nach einem der vorhergehenden Ansprüche, **dadurch gekennzeichnet, dass** mit den vom Logikbaustein (11) durchgeschalteten Ansteuersignalen H-Brücken-Schaltungen der Motoren (12, 13, 14, 15) ansteuerbar sind.

7. Schaltungseinrichtung nach einem der vorhergehenden Ansprüche, **dadurch gekennzeichnet, dass** die mindestens zwei separaten Motoren (12, 13) des Brems- und Beschleunigungssystems und die mindestens zwei separaten Motoren (14, 15) des Lenksystems jeweils eine gemeinsame Welle antreiben.

8. Verfahren zur Steuerung eines Beschleunigungs- und Bremssystems und eines Lenksystems eines Fahrzeugs mit mindestens zwei separaten Motoren (12, 13) zur Betätigung des Beschleunigungs- und Bremssystems und mindestens zwei separaten Motoren (14, 15) zur Betätigung des Lenksystems, **dadurch gekennzeichnet, dass** von mindestens einer elektronischen Kontrolleinheit (10) mit drei identischen CPUs (CPU1, CPU2, CPU3) und einem programmierbaren Logikbaustein (11) Eingangssteuersignale (16, 17) und Sensorsignale von den Motoren (12 - 15) empfangen werden, die von den drei CPUs (CPU1, CPU2, CPU3) ausgewertet werden, wobei jede der CPUs (CPU1, CPU2, CPU3) aus den Eingangssteuersignalen (16, 17) sowie Sensorsignalen von den Motoren (12, 13, 14, 15) Ansteuersignale für die Motoren (12, 13, 14, 15) erzeugt, die Ansteuersignale der CPUs miteinander verglichen werden und der Logikbaustein (11) die Ansteuersignale einer der CPUs in Abhängigkeit von seiner Programmierung zu den Motoren (12, 13, 14, 15) durchschaltet, wobei die CPUs (CPU1, CPU2, CPU3) jeweils auch Signale von den beiden benachbarten CPUs (CPU1, CPU2, CPU3) empfangen und mit ihrem eigenen Signal vergleichen und das Vergleichsergebnis an den Logikbaustein (11) weiterleiten, sodass der Logikbaustein (11) neben direkten Signalen von den CPUs (CPU1, CPU2, CPU3) jeweils auch Vergleichsergebnisse der Signale der beiden benachbarten CPUS (CPU1, CPU2, CPU3) empfängt.

9. Verfahren nach Anspruch 8, **dadurch gekennzeichnet, dass** der Logikbaustein (11) die Ansteuersignale derjenigen CPU (CPU1) durchschaltet, die beim Vergleich der Ansteuersignale dieser CPU (CPU1) mit den Ansteuersignalen, die von den beiden anderen CPUs (CPU2, CPU3) erzeugt werden, am vertrauenswürdigsten erscheint.

## Claims

1. Switching device for controlling an accelerating, braking and steering system of a vehicle with at least two separate motors (12, 13) for operating the accelerating and braking system and at least two separate motors (14, 15) for operating the steering system, and with at least one electronic control unit (10) for controlling the at least two separate motors (12, 13) for operating the accelerating and braking system as well as the at least two separate motors (14, 15) for operating the steering system, **characterised in that** the at least one control unit (10) has three identical CPUs (CPU1, CPU2, CPU3) and a programmable logic unit (11), in which, depending on input control signals (16, 17) as well as sensor signals from the motors (12, 13, 14, 15), each of the CPUs (CPU1, CPU2, CPU3) produces control signals for the motors (12, 13, 14, 15) and forwards them to the programmable logic unit (11), which, depending on its programming, forwards the control signals from one of the CPUs (CPU1, CPU2, CPU3) to the motors (12, 13, 14, 15), and each CPU (CPU1, CPU2, CPU3) receives the control signals from both of the other CPUs and compares them with its own control signals and forwards the result of the comparison to the programmable logic unit (11), so that, apart from direct signals from the CPUs (CPU1, CPU2, CPU3), the logic unit (11) also receives the results of the comparison of the signals from both of the adjacent CPUS (CPU1, CPU2, CPU3).

2. Switching device according to claim 1, **characterised in that** the programmable logic unit (11) is a CPLD (complex programmable logic device).

3. Switching device according to claim 1 or 2, **characterised in that** the input control signals (16, 17) may be produced by operating elements of the braking and accelerating system and the steering system and by position sensors of the motors (12 - 15).

4. Switching device according to claim 3, **characterised in that** the operating elements are joysticks, steering wheels and/or pedals.

5. Switching device according to one of the previous claims, **characterised in that** the sensor signals may be produced by current measuring devices and/or temperature sensors on each of the motors (12, 13, 14, 15).

6. Switching device according to one of the previous claims, **characterised in that** H-bridge circuits of the motors (12, 13, 14, 15) may be controlled with the control signals switched through by the logic unit (11).

7. Switching device according to one of the previous claims, **characterised in that** the at least two separate motors (12, 13) of the braking and accelerating system and the at least two separate motors (14, 15) of the steering system each drive a common shaft.

8. Method for controlling an accelerating and braking system and a steering system of a vehicle with at least two separate motors (12, 13) for operating the accelerating and braking system and at least two separate motors (14, 15) for operating the steering system, **characterised in that** input control signals (16, 17) and sensor signals from the motors (12 - 15) are received by at least one electronic control unit (10) with three identical CPUs (CPU1, CPU2, CPU3) and a programmable logic unit (11), which are evaluated by the three CPUs (CPU1, CPU2, CPU3), in which each of the CPUs (CPU1, CPU2, CPU3) produces control signals for the motors (12, 13, 14, 15) from the input control signals (16, 17) as well sensor signals from the motors (12, 13, 14, 15), the control signals of the CPUs are compared with each other and, depending on its programming, the logic unit (11) switches through the control signals from one of the CPUs to the motors (12, 13, 14, 15), in which the CPUs (CPU1, CPU2, CPU3) also each receive signals from both of the adjacent CPUs (CPU1, CPU2, CPU3) and compare them with their own signal and forward the result of the comparison to the logic unit (11), so that, apart from direct signals from the CPUs (CPU1, CPU2, CPU3), the logic unit (11) also receives the results of the comparison of the signals from both of the adjacent CPUS (CPU1, CPU2, CPU3).

9. Method according to claim 8, **characterised in that** the logic unit (11) switches through the control signals from the CPU (CPU1), which seems the most reliable when comparing the control signals from this CPU (CPU1) with the control signals, which are produced by both of the other CPUs (CPU2, CPU3).

## Revendications

1. Dispositif de commutation pour commander un système d'accélération, de freinage et de direction d'un véhicule avec au moins deux moteurs séparés (12, 13) pour actionner le système d'accélération et de freinage et d'au moins deux moteurs séparés (14, 15) pour actionner le système de direction, et avec au moins une unité de commande électronique (10) pour commander les au moins deux moteurs séparés (12, 13) pour actionner le système d'accélération et de freinage ainsi que les au moins deux moteurs séparés (14, 15) pour actionner le système de direction, **caractérisé en ce que** la au moins une unité de commande (10) présente trois CPU identiques (CPU1, CPU2, CPU3) et un composant logique programmable (11), dans lequel chacune des CPU (CPU1, CPU2, CPU3) produit en fonction des signaux de commande d'entrée (16, 17) et des signaux de capteur des moteurs (12, 13, 14, 15) des signaux de commande pour les moteurs (12, 13, 14, 15) et les retransmet au composant logique programmable (11) qui transmet, en fonction de sa programmation, les signaux de commande d'une des CPU (CPU1, CPU2, CPU3) aux moteurs (12, 13, 14, 15), et **en ce que** chaque CPU (CPU1, CPU2, CPU3) reçoit les signaux de commande des deux autres CPU, les compare à ses propres signaux de commande et transmet le résultat de comparaison au composant logique programmable (11), de sorte que le composant logique (11) reçoit non seulement des signaux directs des CPU (CPU1, CPU2, CPU3) mais aussi des résultats de comparaison des signaux des deux CPU adjacentes (CPU1, CPU2, CPU3).

2. Dispositif de commutation selon la revendication 1, **caractérisé en ce que** le composant logique programmable (11) est un CPLD (complex programmable logic device).

3. Dispositif de commutation selon la revendication 1 ou 2, **caractérisé en ce que** les signaux de commande d'entrée (16, 17) peuvent être produits par des éléments de commande du système de freinage et d'accélération et du système de direction et par des capteurs de position des moteurs (12 - 15).

4. Dispositif de commutation selon la revendication 3, **caractérisé en ce que** les éléments de commande sont des joysticks, volants et/ou pédales.

5. Dispositif de commutation selon l'une quelconque des revendications précédentes, **caractérisé en ce que** les signaux de capteur peuvent être produits par des dispositifs de mesure de courant et/ou des capteurs de température sur chacun des moteurs (12, 13, 14, 15).

6. Dispositif de commutation selon l'une quelconque des revendications précédentes, **caractérisé en ce que** les signaux de commande commutés par le composant logique (11) permettent de commander des circuits à pont en H des moteurs (12, 13, 14, 15).

7. Dispositif de commutation selon l'une quelconque des revendications précédentes, **caractérisé en ce que** les au moins deux moteurs séparés (12, 13) du système de freinage et d'accélération et les au moins deux moteurs séparés (14, 15) du système de direction entraînent respectivement un arbre commun.

8. Procédé de commande d'un système d'accélération et de freinage et d'un système de direction d'un véhicule équipé d'au moins deux moteurs séparés (12, 13) pour actionner le système d'accélération et de freinage et d'au moins deux moteurs séparés (14, 15) pour actionner le système de direction, **caractérisé en ce que** des signaux de commande d'entrée (16, 17) et des signaux de capteur des moteurs (12 - 15) sont reçus par au moins une unité de commande électronique (10) comportant trois CPU identiques (CPU1, CPU2, CPU3) et un composant logique programmable (11), qui sont évalués par les trois CPU (CPU1, CPU2, CPU3), dans lequel chacune des CPU (CPU1, CPU2, CPU3) produit à partir des signaux de commande d'entrée (16, 17) et des signaux de capteur des moteurs (12, 13, 14, 15) des signaux de commande pour les moteurs (12, 13, 14, 15), les signaux de commande des CPU sont comparés entre eux, et le composant logique (11) commute les signaux de commande d'une des CPU en fonction de sa programmation avec les moteurs (12, 13, 14, 15), dans lequel les CPU (CPU1, CPU2, CPU3) reçoivent également respectivement des signaux des deux CPU adjacentes (CPU1, CPU2, CPU3) et les compare à leurs propres signaux et transmettent le résultat de comparaison au composant logique programmable (11), de sorte que le composant logique (11) reçoit non seulement des signaux directs des CPU (CPU1, CPU2, CPU3) mais aussi des résultats de comparaison des signaux des deux CPU adjacentes (CPU1, CPU2, CPU3).

9. Procédé selon la revendication 8, **caractérisé en ce que** le composant logique (11) commute les signaux de commande de la CPU (CPU1) qui apparaît comme étant la plus fiable lors de la comparaison des signaux de commande de cette CPU (CPU1) aux signaux de commande produits par les deux autres CPU (CPU2, CPU3).
